# EUROPEAN PATENT APPLICATION

(11) **EP 1 103 894 A2**
(43) Date of publication of application: **30.05.2001**
(21) Application number: 00124318.7
(22) Date of filing: 16.11.2000
(51) Int. Cl.: G06F 11/14

(54) **Fragmented data recovery method**

(30) Priority: 17.11.1999 KR 9951140
(71) Applicant: Finaldata Inc., Seoul (KR)
(72) Inventor: Lee, Chae-Hong, Kangnam-ku, Seoul (KR)
(74) Representative: Modiano, Guido, Dr.-Ing.

(57) **Abstract**

Disclosed is a method for recovering damaged data from a hard disk having the damaged data including the steps of: reading the hard disk drive and detecting partition information; analyzing information on a FAT, a root directory, and data sectors from the detected partition information, and searching for damaged directory information; using a searcher interface and recovering the found directory; displaying sector viewers of the data and directories; displaying data viewers of the data; and checking whether clusters are fragmented automatically finding next fragmented clusters, and automatically editing allocation values of the respective clusters, and storing the recovered FAT information in a storage device.

## Description

### BACKGROUND OF THE INVENTION

### (a) Field of the Invention

The present invention relates to a data recovering method. More specifically, the present invention relates to a method for the recovering of fragmented file data on a hard disk, a recording media which is readable by a computer.

### (b) Description of the Related Art

In general, a hard disk drive stores data on a magnetic disk and is widely used as a storage device of a computer system because of its high storage capacity. Recently, as personal computers have been greatly disseminated, the use of hard disks has also increased.

Hard disks can be easily damaged or lose data because of physical or electrical shocks, mistakes by the users, overuse, or violations between programs.

With the increasing use of personal computers, nowadays tasks require much more manipulation of computers, and the dependence on computers has increased so that many data files are stored on personal computers, and users now perform their work using the stored data files.

However, as the weight of work linked to computers increases, the incurred damage becomes greater when users mistakenly delete stored files, or even entire directories, which store work related files.

Also, when a user executes a vaccine program to remove computer viruses in a storage device, such as a floppy disk that is put into a personal computer, the computer receives some degree of protection from being infected with computer viruses. However, recent computer viruses frequently infect the computers via the Internet, and when this occurs, the data stored in the computer, or even the computer system itself cannot be used because of the computer viruses.

Various methods for recovering damaged data have been provided, but fragmented data located on a damaged part of a hard disk cannot be recovered in its original form.

### SUMMARY OF THE INVENTION

It is an object of the present invention to provide a method for recovering fragmented data on a hard disk, a computer readable recording media for storing the fragmented data from the recovering method.

In one aspect of the present invention, a method for recovering damaged data from a hard disk having the damaged data comprises the steps of: (a) reading the hard disk drive and detecting partition information; (b) analyzing information on a file allocation table (FAT), a root directory, and data sectors from the detected partition information, and searching for damaged directory information; (c) using a searcher interface and recovering the found directory; (d) displaying sector viewers of the data and directories; (e) displaying data viewers of the data; (f) checking, through the displayed sector viewers and data viewers, whether clusters are fragmented; (g) automatically finding next fragmented clusters when clusters are found to be fragmented in the step (f), and automatically editing allocation values of the respective clusters so as to recover the data, and storing the recovered FAT information in a storage device; (h) manually dragging and dropping an FAT editor, when clusters are found to be fragmented in the step (f), and automatically editing allocation values of the respective clusters so as to recover the data, and storing the recovered FAT information in the storage device; (i) storing the recovered data in another drive when clusters are found not to be fragmented in the step (f) and after the recovered FAT information is stored in the steps (g) and (h); (j) checking whether the stored data have been recovered normally; (k) marking the allocated FAT to indicate the cluster that was used at the time of recovering the data when the stored data have been determined to have been normally recovered in the step (j); (I) manually editing the allocation values of the clusters when the stored data have been determined to have been abnormally recovered in the step (j); and (m) the user extracting a normal record from recovered file data in order to save it as a readable file when the fragmented file is not recovered successfully according to the above-noted steps.

The FAT information (Disk FAT and file FAT) is stored in a storage device.

The FAT information stored in a storage device can be saved as a file in another drive differing from the damaged drive and then can be loaded into the storage device, and when the fragmented file to recover is fully completed or there are several files to recover simultaneously, the last FAT status is stored into a file and is reused the next time to resume the recovery operation.

In another aspect of the present invention, a method for recovering fragmented data from a hard disk having fragmented data comprises the steps of: (a) recovering fragmented files by going through a creation and deletion routine for originally creating the files so as to recover a File Allocation Table (FAT), and retrieving the files by using the recovered FAT; (b) automatically recovering the fragmented files if parts of data located between fragments of a destination file are recovered and are not regarded as next available clusters of the destination file; (c) automatically analyzing the data format of each cluster within the specified range so as to recover the fragmented cluster of files while the files are fragmented in clusters, and collecting the next linked clusters in a fragment list; (d) recovering fragmented files manually by checking data directly using a sector viewer, a FAT editor, and a data viewer when the next cluster is not found in the step (c); (e) extracting a normal record from recovered file data in order to save it as a readable file when the fragmented file is not recovered successfully using the above-noted steps.

### BRIEF DESCRIPTION OF THE DRAWINGS

The accompanying drawings, which are incorporated in and constitute a part of the specification, illustrate the embodiment of the invention, and, together with the description, serve to explain the principles of the invention:
FIG. 1 is a flow chart of a method for recovering fragmented files in a hard disk according to a preferred embodiment of the present invention;
FIG. 2 is a display screen of sector viewers (Disk viewer and File viewer) according to the preferred embodiment of the present invention;
FIG. 3 is a display screen of a file allocation table (FAT) according to the preferred embodiment of the present invention;
FIG. 4 is a display screen of an image viewer, a part of data viewers, according to the preferred embodiment of the present invention; and
FIG. 5 is a display screen of a fragment gathering function.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

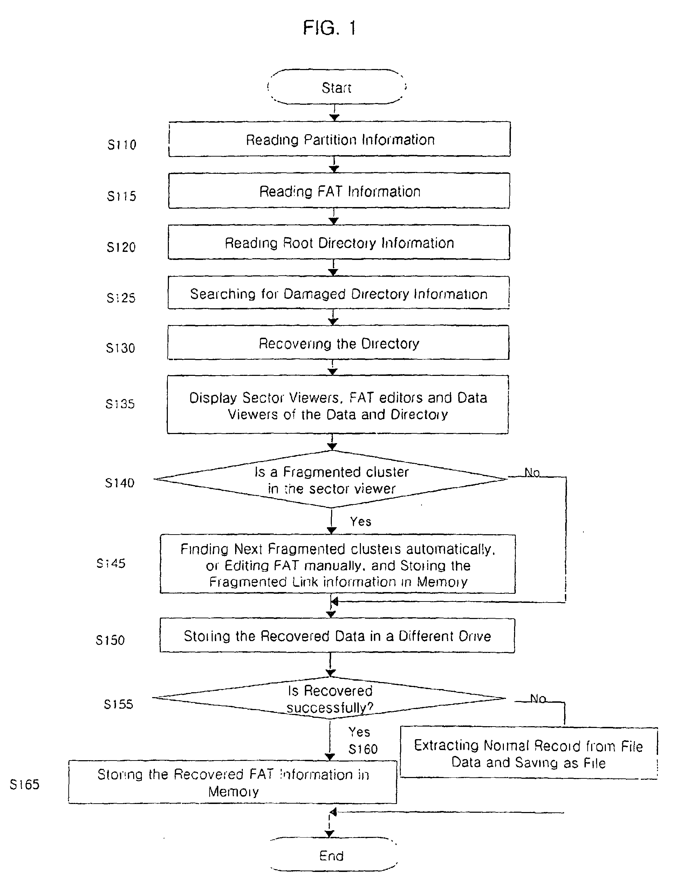

FIG. 1 is a flow chart of a method for recovering fragmented files in a hard disk according to the preferred embodiment of the present invention.

As shown in FIG. 1, partition information is read from a damaged hard disk drive in step S110. The partition information has partition divisional information. In detail, the partition information has information needed to divide one drive into many different partitions. Generally, a logical drive formation of a FAT file system comprises a boot sector, a first FAT, a second FAT, a root directory entry, and files. A detailed description on the FAT file system can be obtained from 'Advanced MS DOS Programming' by Duncan, published by Microsoft in 1986 and 1998.

For example, the FAT file system as described below comprises a partition table, a boot sector, a FAT, a root directory, and data sector information.

| | | | | |
|---|---|---|---|---|
| Partition table | Boot sector | FAT | Root directory | Data |

Generally, the partition table has information on a start position and size of each drive when a physical hard disk has been divided into one or more logical drives. For example, in a case of dividing a 4 gigabyte hard disk into two logical drives each of 2 gigabytes in size, the partition table has information that the first logical drive occupies a position from 0 to 2 gigabytes on the hard disk and the second logical drive occupies from 2 to 4 gigabytes (refer to the below struct PARTITION_TABLE).

The boot sector is positioned on a first sector of each partition and has information on the sorts of file systems, the size of the FAT, the total number of sectors, the position of a start cluster, and the sector numbers (refer to the below struct A_BF_BPB=BIOS parameter block).

The FAT detects the position of a cluster that allocates the files and stores the links of the clusters.

The root directory, the highest directory of the files or directories, stores directory structures, file name, start sector, file size, sub directory information, and drive label. When the root directory is damaged, the files cannot be found by a normal operating system.

Hereinafter, the structure of the partition table and the BIOS parameter block (BPB) will be described.

When dividing a hard disk into one or more logical drives, the partition table has information on the allocation of each partition. In more detail, the partition table has the following contents:

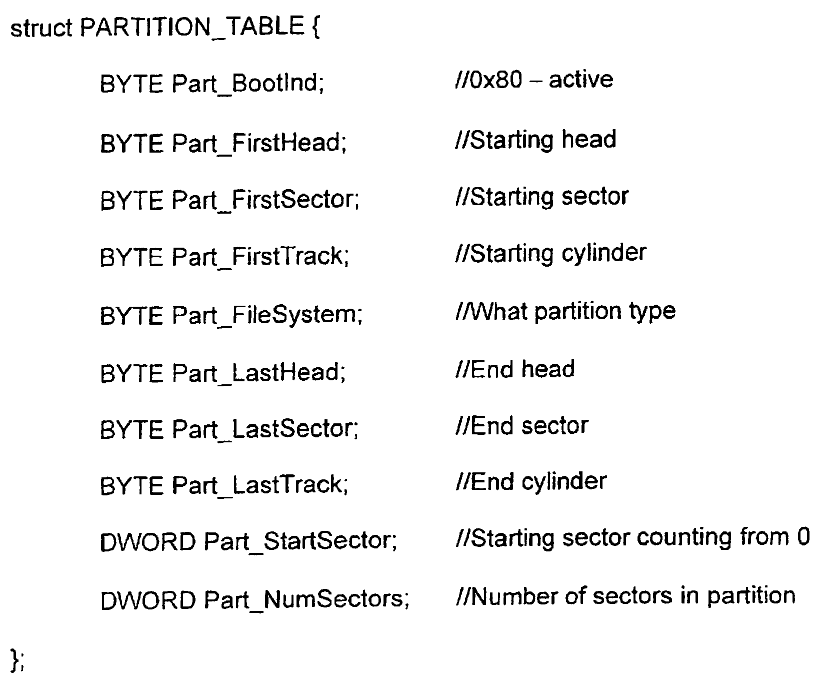

Here, the Part_Bootlnd is '0x80' for a bootable partition, and Part_Bootlnd is '0' for an unbootable partition.

Furthermore, the values of Part_FileSystem have the following meanings:

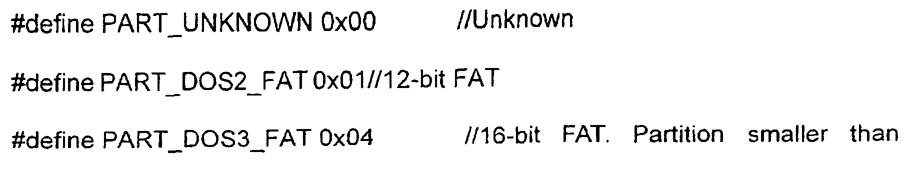

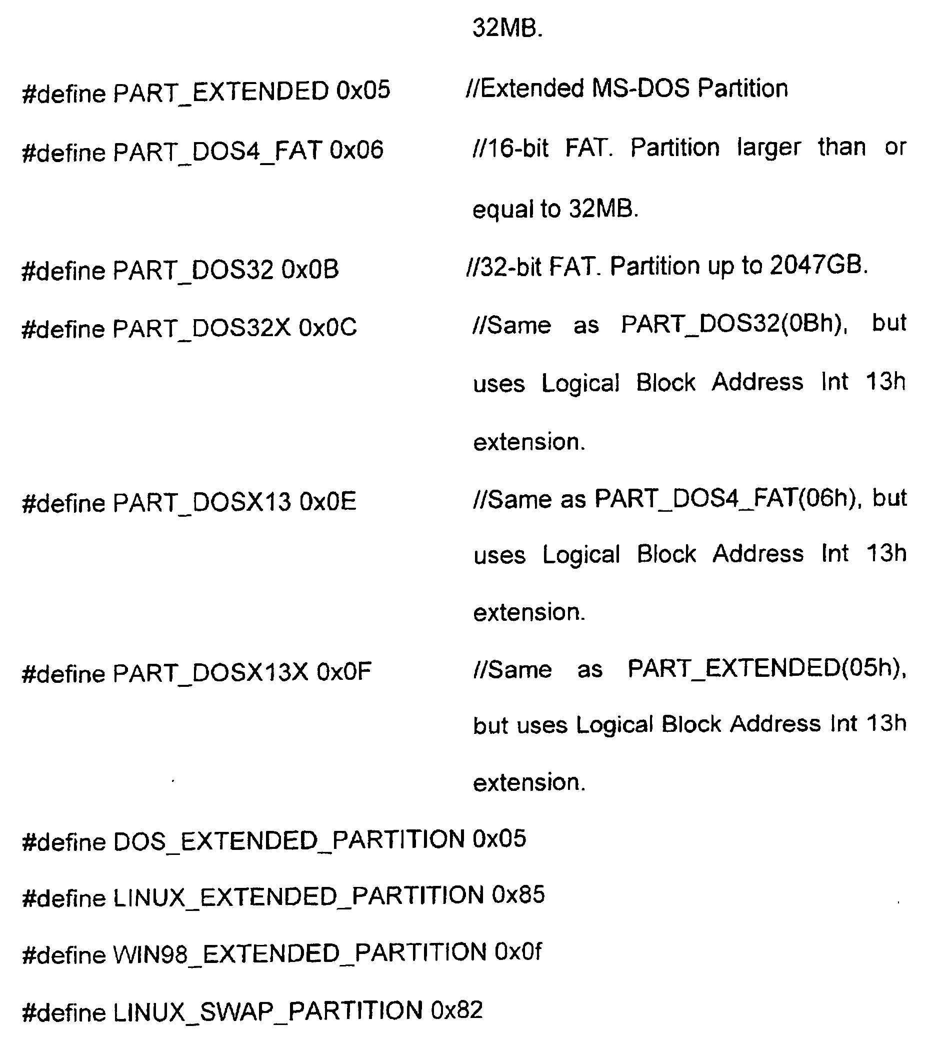

Values of the boot sector are detected, and the disk information is analyzed based on the values of the boot sector. At this time, the boot sector generally contains the file system information for one drive. For example, FAT16, FAT32, and NT (Windows NT) file systems (NTFS) have boot sectors with different information. As one example, the structure of the BPB of the boot sector used in the FAT32 is as follows:

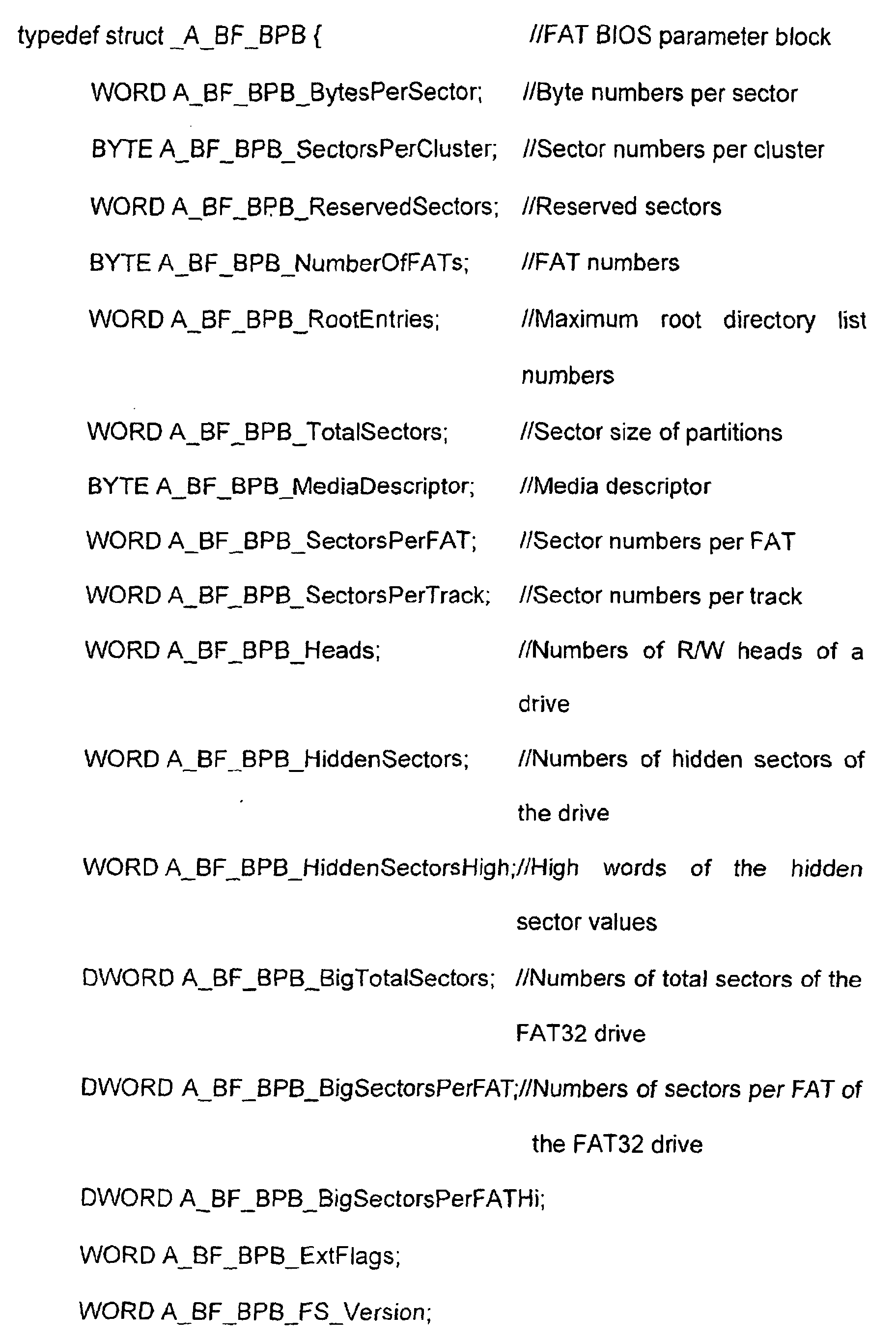

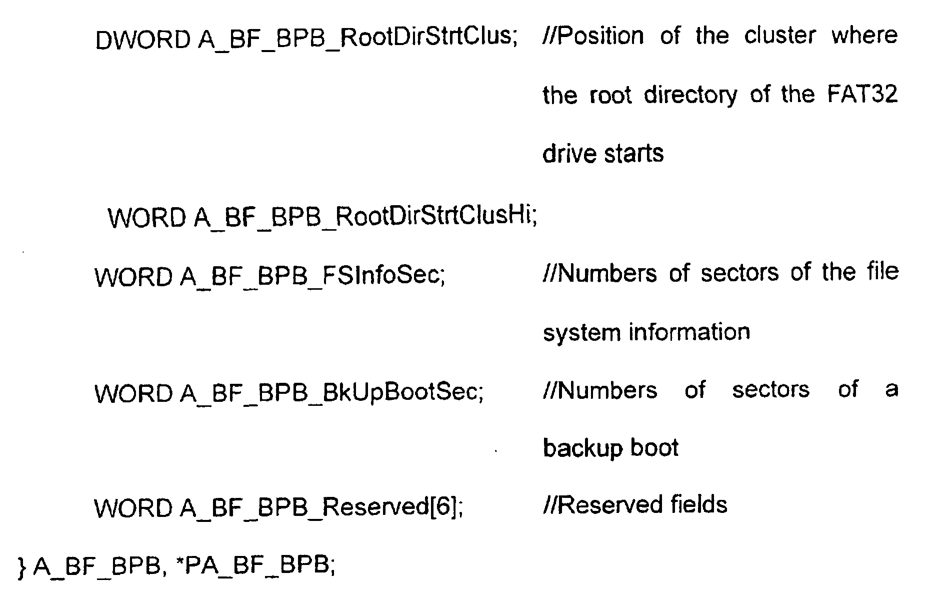

Referring to FIG. 1 again, the FAT information is read from the hard disk drive in step S115 and the root directory information is read in step S120.

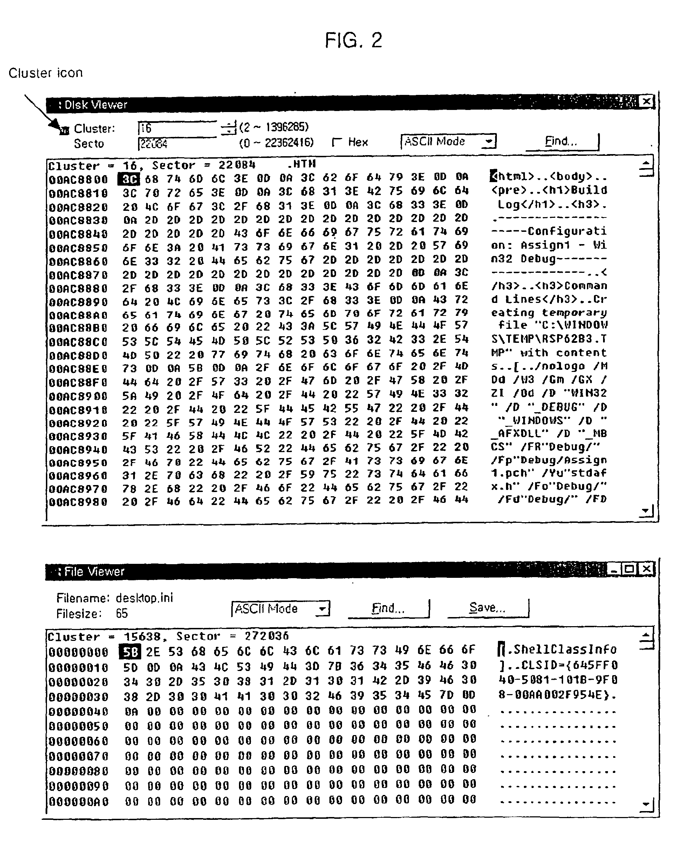

The data sectors are analyzed and a search is made for the damaged directory information in step S125, and the searched directory is recovered using a searcher interface in step S130. As shown in FIG. 2, FIG. 3 and FIG. 4, the sector viewers, FAT editors and Data viewers are displayed in step S135.

FIG. 2 shows a displayed screen of sector viewers (Disk viewer and File viewer) according to the preferred embodiment of the present invention.

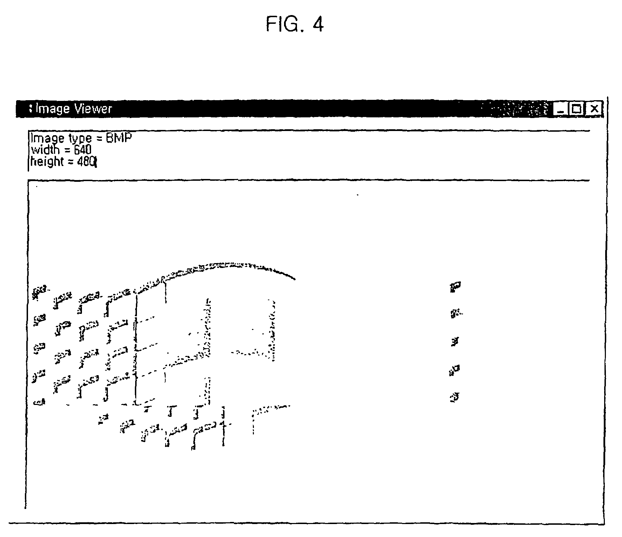

A user can check whether or not the clusters are fragmented in step S140 from the sector viewers and data viewers of the Data and Directory in the previous step S135 as shown in FIG. 2 and FIG. 4 respectively.

The user can check the fragmented data by checking the sectors of the hard disk with the sector viewers in FIG. 2 and data viewers in FIG. 4. For example, it is possible to determine if the fragmented data are in a block where a text file exists while the data are displayed as binary or hexa codes and when the data are displayed as text codes.

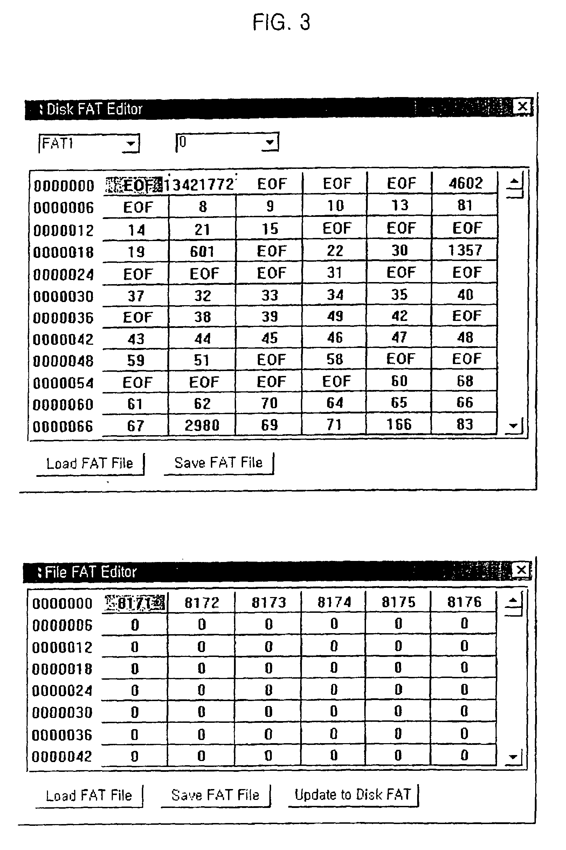

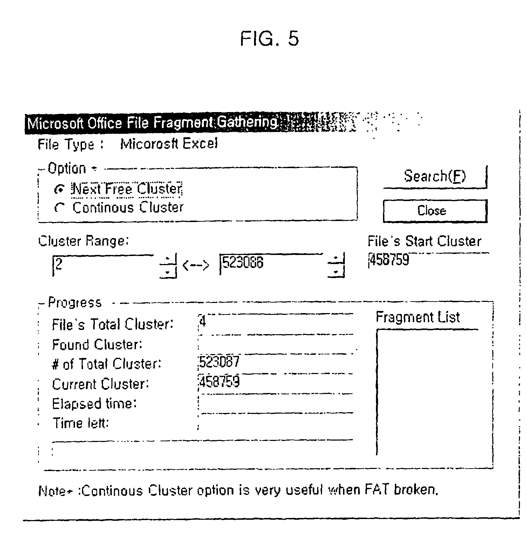

When it is determined that the clusters are fragmented in the sector viewer screen displayed in the previous step S140, the user can find next fragmented clusters automatically (FIG. 5) or the user manually drags and drops the FAT editor (FIG. 2 and FIG. 3) to edit information on the fragmented links in step S145. At this time, the FAT editor automatically and directly edits the allocation values of the respective clusters, and can also edit the physical sectors, logical sectors, or clusters.

Also, an option for displaying the data as a specific pattern (binary, Unicode, text, etc.) according to formats so as to store the sectors or clusters of a predetermined area can be added.

FIG. 3 shows a display screen that shows the disk FAT and the file FAT of the file and directory.

Referring to FIG. 3, clusters corresponding to files are displayed with different colors, and other clusters corresponding to the displayed files can be allocated, and the remaining ones are manually edited.

A menu for selecting a next cluster from the present cluster by clicking a mouse is included. At this time, the next cluster can be selected from the FAT table or the disk viewer. A new clipboard format is made to implement this function. That is, when the user pushes a 'cluster icon of disk viewer' in FIG. 2, a function is implemented through the clipboard and window message to determine whether the mouse pointer controller will be controlled through global variables.

The recovered data are stored in the hard disk of other drive in step S150 and the recovered FAT information is stored in a memory in step S165. At this time, obviously, the capacity of the hard disk of the other drive must be equal to or greater than the capacity that will be recovered from the damaged hard disk.

In case the fragmented file is not recovered successfully in step S155, the user can extract a normal record from recovered file data in order to save it as a readable file in step S160.

As noted above, when initially recovering data with a general data recovering method, such as when using DOS or the Norton Utility undelete program, when a user deletes data, a FAT value is allocated and the FAT value is written on the hard disk, and therefore, data can be lost. However, in the present invention, the FAT information is handled in the memory, and after the data are recovered and checked so as to determine whether the recovered data are normal, the FAT is indicated for allocation. Thereby, data are handled in a safer manner than in the prior art, and the data recovery ratio is greatly increased.

To maintain the FAT information managed by the memory when the computer is rebooted, a function to store or load the FAT information as a file is added. In this case, the FAT information is stored not on the damaged hard disk, but on a hard disk of another safe drive.

Generally, when a user misuses a computer or when the data stored on the hard disk drive are damaged because of some fault in the hardware of the computer itself, the information recorded in the data system of the hard disk or registry is also changed. Therefore, by comparing this information with the initial state of the data system and registry, the differences found can indicate that part of the hard disk drive in which the differences had occurred is damaged.

In the preferred embodiment of the present invention, when fragmentations occur in the data stored on a hard disk, FAT information is read into the memory to facilitate recovery of fragmented data automatically and manually. After the data are recovered, the file is checked to see whether it is normal. Following this check, the FAT is indicated as allocated, and therefore the data are safely recovered, and the data recovery ratio is increased. In the case the fragmented file is not recovered successfully with the above methods, the user can extract a normal record from recovered file data so as to save it as a readable file.

While this invention has been described in connection with what is presently considered to be the most practical and preferred embodiment, it is to be understood that the invention is not limited to the disclosed embodiments, but, on the contrary, is intended to cover various modifications and equivalent arrangements included within the spirit and scope of the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for recovering damaged data from a hard disk having the damaged data, comprising the steps of:
(a) reading the hard disk drive and detecting partition information;
(b) analyzing information on a file allocation table (FAT), a root directory, and data sectors from the detected partition information, and searching for damaged directory information;
(c) using a searcher interface and recovering the found directory;
(d) displaying sector viewers of the data and directories;
(e) displaying data viewers of the data;
(f) checking, through the displayed sector viewers and data viewers, whether clusters are fragmented;
(g) automatically finding next fragmented clusters when clusters are found to be fragmented in the step (f), and automatically editing allocation values of the respective clusters so as to recover the data, and storing the recovered FAT information in a storage device;
(h) manually dragging and dropping an FAT editor when clusters are found to be fragmented in the step (f), and automatically editing allocation values of the respective clusters so as to recover the data, and storing the recovered FAT information in the storage device;
(i) storing the recovered data in another drive when clusters are found not to be fragmented in the step (f) and after the recovered FAT information is stored in the steps (g) and (h);
(j) checking whether the stored data have been recovered normally;
(k) marking the allocated FAT to indicate the cluster that was used at the time of recovering the data when the stored data have been determined to have been normally recovered in the step (j);
(I) manually editing the allocation values of the clusters when the stored data have been determined to have been abnormally recovered in the step (j); and
(m) the user extracting a normal record from recovered file data in order to save it as a readable file when the fragmented file is not recovered successfully according to the above-noted steps.

2. The method of claim 1, wherein the FAT information (Disk FAT and file FAT) is managed in a storage device.

3. The method of claim 2, wherein the FAT information managed in the storage device can be saved as a file in another drive differing from the damaged drive and then can be loaded into the storage device, and when the fragmented file to recover is fully completed or there are several files to recover simultaneously, the last FAT status is stored into a file and reused the next time to resume the recovery operation.

4. The method of claim 1, wherein file recovery is realized by determining if the file is normal after recovery, then the FAT is displayed as something that is allocated.

5. A method for recovering fragmented data from a hard disk having fragmented data, comprising the steps of:
(a) recovering fragmented files by going through a creation and deletion routine for originally creating the files so as to recover a File Allocation Table (FAT), and retrieving the files by using the recovered FAT;
(b) automatically recovering the fragmented files if parts of data located between fragments of a destination file are recovered and are not regarded as next available clusters of the destination file;
(c) automatically analyzing the data format of each cluster within the specified range so as to recover the fragmented cluster of files while the files are fragmented in clusters, and collecting the next linked clusters in a fragment list;
(d) recovering fragmented files manually by checking data directly using a sector viewer, a FAT editor, and a data viewer when the next cluster is not found in the step (c); and
(e) extracting a normal record from recovered file data in order to save it as a readable file when the fragmented file is not recovered successfully using the above-noted steps.

6. A recording medium that can read by a computer storing a method for recovering fragmented data of a hard disk, the method comprising the steps of:
(i) opening a hard disk drive and detecting partition information;
(ii) analyzing FAT information, root directory information, and sector information from the detected partition information, and searching damaged directory information;
(iii) recovering a found directory using a search tool interface;
(iv) displaying a data sector viewer and a directory sector viewer;
(v) determining if there is a fragmented cluster in the displayed sector viewer;
(vi) dragging and dropping a FAT editor to edit an allocated value of each cluster if there is a fragmented cluster in step (v), and storing recovered FAT information in a storage device;
(vii) storing recovered data in another drive if there is not a fragmented cluster in step (v) or after the recovered FAT information is stored in the storage device in step (vi);
(viii) determining if the storing of the data has been completed normally;
(ix) marking an allocated FAT with the used cluster during data recovery if the storing of the data has been completed normally in step (viii); and
(x) editing the allocated value of the cluster if the storing of the data has not been completed normally in step (viii).
